# EUROPEAN PATENT SPECIFICATION

(11) **EP 3 236 055 B1**
(45) Date of publication and mention of the grant of the patent: **04.06.2025**
(21) Application number: 16166213.5
(22) Date of filing: 20.04.2016
(51) Int. Cl.: F02D 41/22

(54) **AN ENGINE DIAGNOSTICS CONFIGURATION METHOD**
MOTORDIAGNOSTIKKONFIGURATIONSVERFAHREN
PROCÉDÉ DE CONFIGURATION DE DIAGNOSTICS DE MOTEUR

(43) Date of publication of application: 25.10.2017
(73) Proprietor: Ford Global Technologies, LLC, Dearborn, MI 48126 (US)
(72) Inventor: O'BRIEN, Diarmuid, Chelmsford, Essex CM2 8EA (GB)
(74) Representative: Haseltine Lake Kempner LLP

(56) References cited:
- DE-A1- 102009 001 842
- DE-A1- 102012 209 443
- US-A1- 2009 327 821

## Description

### Technical Field

The present invention relates to a method of configuring an engine diagnostic system using equivalent function identifiers.

### Background

Modern vehicles often comprise a plurality of sensors configured to monitor the operating conditions of the vehicle. The outputs of the sensors may be used by many different systems of the vehicle, in order for the systems to operate efficiently.

When a fault occurs, either with the vehicle or the sensor itself, it may be desirable for the vehicle to perform certain reactions in order to reduce the disruption caused to other systems of the vehicle, to prevent further faults from occurring and to allow the vehicle to continue operating.

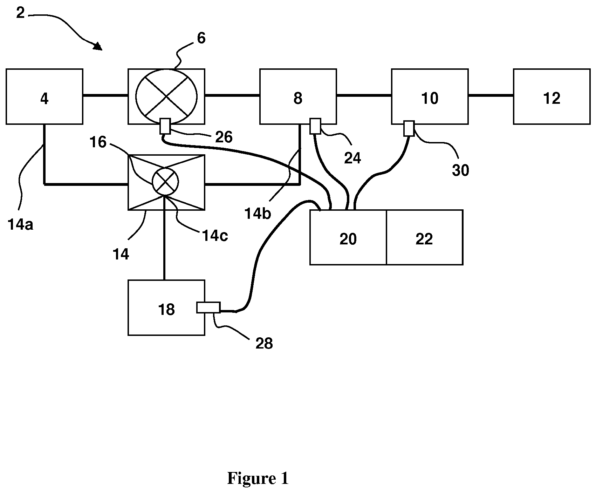

By way of example, with reference to Figure 1, a previously proposed vehicle 2 may comprise an air inlet 4, an inlet manifold 8, an engine 10 and an exhaust 12. An inlet throttle 6 may be provided between the air inlet 4 and the inlet manifold 8 to control the flow of air to the engine 10.

The vehicle 2 may also comprise a super aspirator 14. An inlet 14a of the super aspirator may be in fluid communication with the air inlet 4 and an outlet 14b of the super aspirator may be in fluid communication with the inlet manifold 8. When the engine 10 is operating, there may be a difference in pressure between the air within the inlet manifold 8 and the air at the air inlet 4, e.g. due to the presence of the throttle. This pressure difference may drive a flow of air through the super aspirator 14.

The flow of air through the super aspirator 14 may be controlled by a super aspirator shut off valve 16 provided on the super aspirator between the inlet 14a and the outlet 14b. When the shut off valve 16 is open and a flow of air is passing through the super aspirator 14, the pressure of air at a throat 14c of the super aspirator may be lower than the pressure at the air inlet 4 and in the inlet manifold 8, e.g. the super aspirator 14 may generate a vacuum pressure at the throat 14c.

The super aspirator 14 may be used as a vacuum source for systems on the vehicle such as a brake booster system 18.

The vehicle may further comprise a controller 20 configured to monitor and control the operation of the vehicle 2. The controller 20 may receive inputs from sensors provided on the vehicle, such sensors may include, but are not limited to, a Manifold Air Pressure (MAP) sensor 24, configured to measure a pressure of air within the inlet manifold 8; a Throttle Position Sensor (TPS) 26, configured to measure a position of the inlet throttle, a brake boost sensor 28, configured to measure a brake boost pressure of the brake boost system 18; and a crank position sensor 30, configured to detect an angle of rotation of a crank shaft (not shown) of the engine 10.

During normal operation, the controller 20 may consider the inputs provided from the sensors and may control the operation of the vehicle. For example, a pressure reading from the MAP sensor 24 and a position reading from the crank position sensor 30 may be considered to determine a timing and quantity of fuel to be injected into a cylinder (not shown) of the engine 10. Additionally or alternatively, a position of the super aspirator shut of valve 16 may be controlled to maintain the brake booster pressure at or below a threshold value, according to readings from the brake boost sensor 28.

In the case of a fault occurring with any of the vehicle components or sensors described above, the readings from one or more of the sensors received by the controller 20 may be outside the normal operating ranges for the vehicle 2. It may not be possible to determine whether the fault has occurred with the vehicle component or with the sensor itself. Nevertheless, it may be desirable to perform certain reactions to ensure the controller 20 is able to continue effectively controlling the operation of the vehicle 2. An engine diagnostics system 22 may be provided, which may be configured to perform such reactions in the event of a fault being detected.

Although the diagnostic system 22 is referred to as an engine diagnostic system, the system 22 may detect and react to faults in the wider powertrain, e.g. in the transmission, after-treatment systems, etc., and in the vehicle in which the engine is provided, for example in the safety systems of the vehicle.

The engine diagnostics system 22 may be capable of monitoring a plurality of fault statuses using a plurality of fault monitors. The fault monitors may correspond to a particular component or sensor of the vehicle and may trigger, e.g. determine that a fault has occurred, when no signal is received from the sensor. Alternatively, the fault monitors may be configured to determine whether a particular value or range of values is being detected by the sensor. For example, a first fault monitor may detect a MAP fault, triggered when the MAP sensor 24 records a pressure below a threshold value; a second fault monitor may detect a break booster fault, triggered when the break booster pressure sensor 28 records a pressure above a threshold value; and a third fault monitor may detect a crank sensor fault, triggered when an invalid position is received from the crank position sensor 30.

When a fault is detected by a fault monitor, the engine diagnostics system 22 may perform one or more functions as a reaction to the detection of the fault. Each of the functions may be performed when a certain fault condition is met. Such fault conditions may, for example, define that a function is performed as soon as a fault is detected. Alternatively, the fault condition may specify that the function is performed when the fault persists for a certain period of time. Fault conditions or LIMits may be referenced within the engine diagnostic system 22 as LIMs.

A function, which can be performed by the engine diagnostics system 22 as a reaction to a fault being detected, may be referenced within the engine diagnostics system 22 by a Function Identifier (FId). The FIds may relate to reactions which inhibit or enable other vehicle functions, or reconfigure how the controller 20 operates the vehicle. The FIds may also relate to reactions, which affect how the engine diagnostics system 22 responds to future diagnostic events. For example, if a fault monitor triggers following a MAP fault, the reactions taken may comprise: reconfiguring the vehicle injection system such that fuel injection quantities are calculated based on a reading from the TPS 26 rather than the MAP sensor 24; closing the super aspirator shut-off valve 16 to protect the pressure difference across the inlet throttle; and deactivating any fault monitors relating to the brake booster pressure, which may trigger as a result of closing the super aspirator shut-off valve 16.

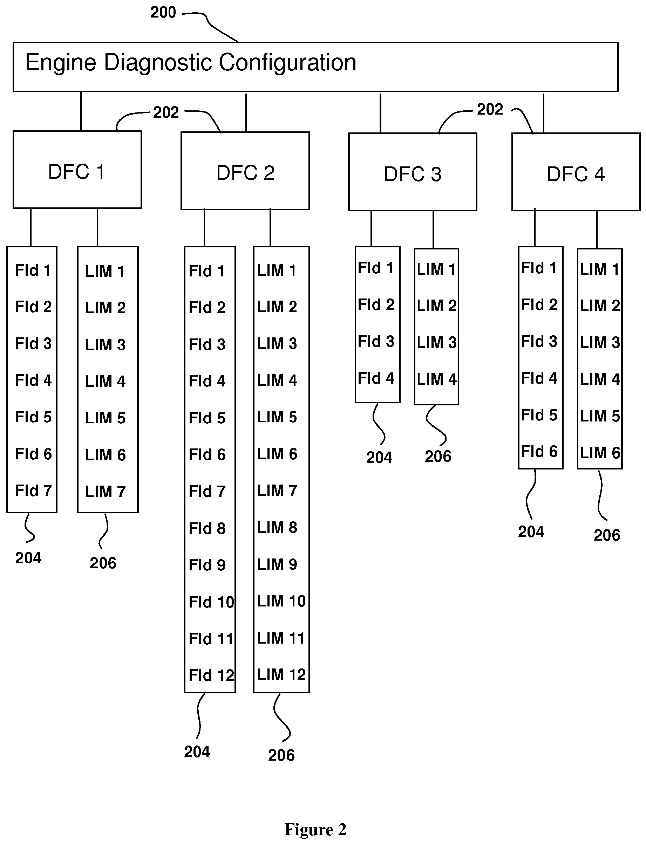

With reference to Figure 2, in order to configure the engine diagnostic system 22 to perform the desired reactions following a diagnostic event, the engine diagnostic system may be configured with an engine diagnostic configuration setting 200. The configuration setting 200 may comprise a plurality of FId arrays 204 and a plurality of corresponding LIM arrays 206. The FId arrays 204 may comprise a plurality of FIds defining the reactions to be taken following detection of a particular fault. The LIM arrays 206 may comprise a plurality of LIMs defining the fault conditions under which each of the reactions, referenced by the FIds in the corresponding FId array, should be taken.

Each element in the LIM array 206 may relate to the corresponding element in the corresponding FId array 204, such that the first LIM may define the fault conditions for performing the reaction defined by the first FId in the corresponding FId array, the second LIM may define the fault conditions for the second FId, etc.

Within the engine diagnostic configuration setting 200 each of the pairs of corresponding FId and LIM arrays 204, 206 may be associated with a Diagnostic Fault Check (DFC), which corresponds to a fault monitor of the engine diagnostic system 22. As described above, each fault monitor of the engine diagnostic system 22 may be operable to determine a particular fault condition of the vehicle 2.

Each pair of arrays 204, 206 may be associated with a different DFC 202. Each DFC 202 may support a predetermined number of FIds and corresponding LIMs. The number of FIds and LIMs that are supported by each DFC may vary between the different DFCs 202. Hence, each FId and LIM array 204, 206 in the configuration setting 200 may be sized to provide the appropriate number of FIds and LIMs.

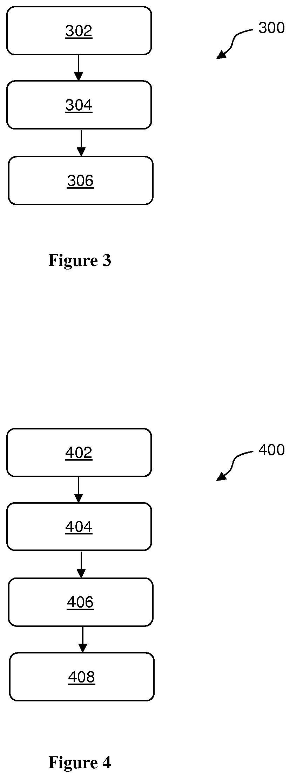

With reference to Figure 3, if a fault is detected by a fault monitor, the engine diagnostic system 22 may react according to a previously proposed method 300. The method may start at a first step 302, when a fault is detected by a fault monitor. In a second step 304, the engine diagnostic system 22 may refer to the engine diagnostic configuration setting 200, which has been applied to the engine diagnostic system 22, to determine the FId array 204 and LIM array 206 associated with the relevant fault monitor, e.g. according to the corresponding DFC.

In a third step 306, the engine diagnostic system 22 may consider each of the FIds and corresponding LIMs stored in the FId and LIM arrays 204, 206 in turn. For each FId, the engine diagnostic system 22 may determine whether the fault condition defined by the corresponding LIM has been met. If the fault condition has been met, the engine diagnostic system 22 may perform the reaction referenced by the FId. The engine diagnostic system 22 may continue considering each of the FId and LIM values until reaching the end of the arrays 204, 206.

As vehicle electrical systems become more complex, the number of sensors provided on the vehicle and hence the number of desirable fault monitors may increase, leading to an increase in the number of DFCs 202. Additionally, the number of possible reactions which can be performed in the event of a fault may increase, leading to an increase in the number of FIds. Additionally again, as the engine diagnostic system 22 is updated to support the increased number of FIds and/or DFCs, a third party supplier making the updates may change the names of the FIds and/or the reactions they refer to. These increases and alterations may complicate the task of configuring of the engine diagnostic system 22. Furthermore, different vehicles, and different versions, e.g. models, of vehicles, may operate using different engine diagnostic systems 22, or engine diagnostics systems using different software versions. Such systems may comprise different fault monitors, associated with different DFCs, which may support different numbers of FIds and LIMs, and/or may support different FIds. Hence, configuring multiple vehicles and/or vehicle models to behave similarly in the case of a particular fault may become highly challenging.

Document DE102012209443 discloses a method involving comparing the measurement value of a functional unit, such as sensing unit, with a corresponding model value to form a comparison value. The model value is calculated based on the data based model in a control device and is outputted together with a validity value of the data based model. A diagnosis module is enabled or disabled by comparing the validation value with a predetermined threshold value. The comparison value is evaluated, only if the diagnosis module is enabled.

Document DE102009001842 discloses a method for controlling a sequence of vehicle-internal functions in a vehicle when the vehicle comes to a standstill caused by a traffic sequence. In order to be able to implement in-vehicle functions in a timely manner, information about the traffic-related standstill is transmitted to the vehicle by a device external to the vehicle and, depending on this information, at least one vehicle-internal function is initiated and / or carried out during the traffic-related standstill.

Document US 2009/327821 discloses a diagnostic system including N dedicated diagnostic modules that each correspond with a respective one of multiple control systems. The N dedicated diagnostic modules each generate status signals indicating results of respective diagnostic tests. A diagnostic error time monitor determines an accumulated error time value between error events for each of the control systems based on the status signals. The diagnostic error time monitor selectively reports a fault to a respective one of the N dedicated diagnostic modules based on the accumulated error time value.

### Statements of Invention

According to the present invention, there is provided a computer implemented method having the features of claim 1 below.

Although the diagnostic system is referred to as an engine diagnostic system, the system may detect and react to faults in the wider powertrain, e.g. in the transmission, after-treatment systems, etc., and in the vehicle in which the engine is provided, for example in the safety systems of the vehicle.

The method further comprises providing a master array associated with a first diagnostic monitor. The master array comprises one or more function identifiers corresponding to functions to be performed following the detection event from the first diagnostic monitor.

The method further comprises searching for the first diagnostic monitor among the set of diagnostic monitors available within the engine diagnostic system. If the first diagnostic monitor is found amount the set of diagnostic monitors, the method further comprises translating the master array into an application specific array associated with the first diagnostic monitor.

If the first diagnostic monitor is not found among the set of diagnostic monitors. The method further comprises identifying an equivalent array associated with an equivalent diagnostic monitor, wherein the equivalent diagnostic monitor is equivalent to the first diagnostic monitor. The equivalent diagnostic monitor is identified from a stored list of equivalent diagnostic monitors. The method further comprises translating the master array into an application specific array associated with the equivalent diagnostic monitor. The identified equivalent diagnostic monitor may be available within the engine diagnostic system.

Translating the master array into an application specific array comprises determining whether the or each function identifier within the master array is available within the engine diagnostic system. If the function identifier is available within the engine diagnostic system, the function identifier is copied from the master array into the application specific array.

If the function identifier is not available with the engine diagnostic system, an equivalent function identifier is determined. The equivalent function identifiers are determined by referring to a list of equivalent function identifiers associated with the function identifiers. The method further comprises copying the equivalent function identifier into the application specific array.

The function identifiers and equivalent function identifiers may be translated in a predetermined order of priority. For example, the function identifiers may be translated in the order in which they are provided in the master array or equivalent array.

The method may further comprise determining an equivalent diagnostic monitor, which is equivalent to the diagnostic monitor available within the diagnostic system. The function identifiers and/or the equivalent function identifiers may be determined by referring to the function identifiers associated with the equivalent diagnostic monitor.

The equivalent diagnostic monitor may be determined by referring to a list of equivalent diagnostic monitors associated with the available diagnostic monitor.

The equivalent diagnostic monitor may or may not be supported by the engine diagnostic system.

The method may further comprise determining the number of function identifiers, which can be associated with the available diagnostic monitor of the engine diagnostic system. The number of function identifiers and equivalent function identifiers used to calibrate the engine diagnostics systems may be less than or equal to the number of function identifiers that can be associated with the available diagnostic monitor.

The method may further comprise determining one or more redundant function identifiers, which may exist in, but are not supported by the engine diagnostic system. Equivalent function identifiers may not determined for function identifiers that are redundant function identifiers.

The redundant function identifiers may be determined by referring to a list of redundant function identifiers associated with the engine diagnostic system.

The function identifiers may be determined by referring to an existing calibration setting for another engine diagnostic system. For example, the function identifiers may be determined by referring to the function identifiers associated with the same or equivalent diagnostic monitors within the existing calibration setting.

The method may further comprise reporting one or more diagnostic monitors and/or function identifiers referenced within the existing calibration setting that are not supported by the engine diagnostic system and have no equivalent diagnostic monitors and/or function identifiers respectively.

According to another aspect of the present disclosure, there is provided a method of calibrating an engine diagnostic system, the method comprising: determining one or more desired function identifiers the or each function identifier being associated with a desired function. The desired functions may be desirable to perform following a predetermined diagnostic event. The method may comprise determining one or more equivalent function identifiers for the or each desired function identifier; the equivalent function identifiers being equivalent to the or each desired function identifier. The method may further comprise generating a calibration setting for the desired engine diagnostic system comprising the equivalent function identifiers.

The method may further comprise determining an available diagnostic monitor, which is available within the desired engine diagnostic system. The desired reaction identifiers may be associated with the available diagnostic monitor, e.g. within the calibration setting.

One or more of the function identifiers may not be supported by the engine diagnostic system. The equivalent function identifiers may be determined for each of the function identifiers that are not supported by the engine diagnostic system.

The method may further comprise determining a set of supported function identifiers, which are supported by the desired engine diagnostic system. The determined function identifiers and/or equivalent function identifiers may be supported function identifiers.

According to another aspect of the present disclosure, there is provided a method of populating a data structure comprising a plurality of arrays, the method comprising: identifying a set of arrays within the data structure and a set of available array elements; determining a desired set of array elements for each of the arrays; determining one or more equivalent array elements associated with one or more of the desired array elements, wherein the equivalent array elements are within the set of available array elements; and populating the arrays with the desired and equivalent array elements. The populated array elements may be within the set of available array elements.

The invention also provides software such as a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

To avoid unnecessary duplication of effort and repetition of text in the specification, certain features are described in relation to only one or several aspects or arrangements of the invention. However, it is to be understood that, where it is technically possible, features described in relation to any aspect or arrangement of the invention may also be used with any other aspect or arrangement of the invention.

### Brief Description of the Drawings

For a better understanding of the present invention, and to show more clearly how it may be carried into effect, reference will now be made, by way of example, to the accompanying drawings, in which:
Figure 1 is a schematic view of a vehicle comprising a previously proposed engine diagnostic system;
Figure 2 is a schematic representation of an engine diagnostic configuration setting;
Figure 3 shows a previously proposed method of responding to an engine diagnostics event;
Figure 4 shows a method of generating an engine diagnostics configuration setting according to arrangements of the present disclosure; and

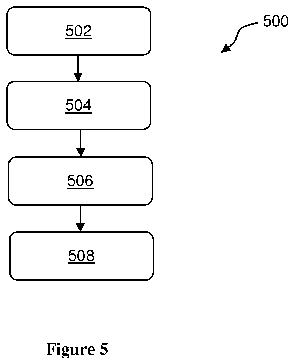

Figure 5 shows a method of translating an engine diagnostics configuration setting according to arrangements of the present disclosure.

### Detailed Description

The engine diagnostic configuration setting 200, as described above with reference to Figure 2, may be applied to any compatible engine diagnostic system 22. To be compatible, it may be necessary for the system to support the same DFCs and the same FIds as defined in the engine diagnostic configuration setting 200. In other words, it may be necessary for the engine diagnostic system 22 to comprise fault monitors which are associated with the same DFCs and also that the system in configured to perform a reaction associated with each of the FIds defined in the engine diagnostic configuration setting 200. In addition, each of the DFCs may be required to support the same numbers of FIds and LIMs as defined in the arrays 204, 206.

In order to facilitate consistent engine diagnostics across multiple engine diagnostics systems, which may be incompatible with one another, a master engine diagnostics configuration setting may be generated.

The master engine diagnostics configuration setting is similar to the engine diagnostics configuration setting 200 described above, however the master engine diagnostics configuration setting may comprise information relating to all engine diagnostic systems of interest. Such information may include a database of all DFCs supported by all engine diagnostic systems of interest and associated arrays of FIds and LIM to be associated with the DFCs. The master engine diagnostics configuration setting may also comprise a list of all FIds defined within each engine diagnostic systems of interest.

The master engine diagnostics configuration setting is applied to a desired engine diagnostics system by associating the relevant FId and LIM arrays with the relevant DFCs of the desired engine diagnostics system.

In order to allow engine diagnostics systems to be configured consistently to provide consistent behaviour following a diagnostic event, the master engine diagnostics configuration setting comprises information associating DFCs with other DFCs that may be equivalent, e.g. which relate to same or an equivalent fault monitor concerned with, for example, the same sensor value or range of values, vehicle component or fault. Equivalent DFCs may be configured once within the master engine diagnostics configuration setting, e.g. a single one of the equivalent fault monitors may be configured, and the setting may be applied to all equivalent fault monitors. Determining equivalencies in this way may allow changes to configuration settings required in the future to be made to a single FId or LIM array 204, 206, rather than to each of the equivalents individually. When applying the master engine diagnostics configuration setting to a desired engine diagnostics system, FId and LIM arrays associated with equivalent DFCs are applied, as described in more detail below.

Additionally or alternatively, the master engine diagnostics configuration setting may comprise information associating FIds with other FIds that may be equivalent, e.g. relate to the same function, which can be performed as a reaction following a diagnostic event. This may allow a FId array within the master engine diagnostic configuration setting to be populated with FIds, which are not supported by all engine diagnostic systems, but which have equivalents across one or more of the diagnostic systems. When applying the master engine diagnostics configuration setting to a desired engine diagnostic system, any FId values that are not supported by the desired engine diagnostic system are replaced by an equivalent FId, which is supported by the desired engine diagnostic system, as described in more detail below.

The master engine diagnostics configuration setting may also include information relating to the number of FIds, which can be associated with each fault monitor within each engine diagnostics system of interest. When applying the master engine diagnostics configuration setting to a desired engine diagnostic system, only the supported number of FId and LIM can be applied. Hence a single array of FIds may be maintained for each DFC and its equivalents without concern that that number of FIds will be unsupported by one or more engine diagnostic systems of interest. When configuring the master engine diagnostics configuration setting the FIds may be added to each array in order of priority, to ensure that the most important FIds are applied to any engine diagnostic systems that do not support the full number of FIds populated in the array.

The master engine diagnostics configuration setting may further comprise a list of redundant FIds for each engine diagnostic system of interest. When applying the configuration to a desired engine diagnostic system, any FId values which are on the redundant FId list for the desired engine diagnostic system may be ignored, as described in more detail below.

With reference to Figure 4, in order to apply a master engine diagnostic configuration setting to desired engine diagnostic system, a method 400 useful for understanding the present invention, may be used.

In a first step 402, an available DFC of the desired engine diagnostics system may be identified. In a second step 404, an equivalent DFC is determined within the master engine diagnostic configuration, which is equivalent to the available DFC of the desired engine diagnostics system. In a third step 406, the desired FIds to be associated with the available DFC are determined by referring to the equivalent DFC.

The equivalent DFC may be determined by referring to a list of equivalent DFCs associated with the available DFC and selecting a DFC that has been configured within the master engine diagnostics configuration setting.

When applying the desired FIds to the available DFC, it may be determined that one or more desired FIds are not supported, e.g. defined, within the desired engine diagnostics system. The method 400 may therefore comprise a fourth step 408, in which one or more equivalent FIds are determined, which are equivalent to the one or more desired FId and may be supported by the desired engine diagnostics system. The equivalent FIds are determined by referring to a list of equivalent FIds associated with each of the one or more desired FIds.

It may be determined that the equivalent FId is similarly unsupported by the desired diagnostics system and hence the method may repeat the steps of determining an equivalent FId and considering whether it is supported by the desired engine diagnostics system.

In some cases, a FId and its associated equivalent FIds may not be supported by the desired engine diagnostics system, such a FId may be referred to as a redundant FId. Redundant FIds for each engine diagnostic system of interest may be stored within a redundant FIds list, associated with the engine diagnostic system. The method 400 may comprise a step in which it is determined whether a desired FId is a redundant FId for the desired engine diagnostic system. If so, the redundant FId may be disregarded when applying the master configuration setting to the desired engine diagnostic system.

In some cases the desired engine diagnostic system may not support the full number of FIds populated in the relevant array. In this case, the method may apply only the supported number of FIds in the order in which they are populated in the array, such that the most important FIds are applied first. The number of FIds supported by each DFC of the desired engine diagnostic system may be stored within the master engine diagnostics calibration setting, as described above.

By using the method described above, a single consistent engine diagnostic configuration setting, e.g. the master engine diagnostics configuration setting, can be applied to a plurality of known engine diagnostics systems, regardless of the DFCs and FIds that are supported. Any changes required to the configuration setting can be performed once and be applied consistently.

The master engine diagnostics configuration setting described above, can also be used in a method 500, according to another arrangement of the present disclosure, to translate an engine diagnostics configuration setting, which has been defined for a first engine diagnostics system, into an engine diagnostics setting, which is compatible with a second engine diagnostics system.

The method 500 comprises a first step 502, in which an available DFC of the second engine diagnostics system may be identified. In a second step 504, an equivalent DFC is determined from the master engine diagnostic configuration setting, which is equivalent to the available DFC of the second engine diagnostics system and is defined within the engine diagnostics configuration setting for the first engine diagnostics system. In a third step 506, the desired FIds to be associated with the available DFC of the second engine diagnostics system are determined from the engine diagnostics configuration setting for the first engine diagnostics system, by referring to the array of FIds associated with the equivalent DFC.

As described above with reference to the method 400, when associating the desired FIds with the available DFC, it may be determined that one or more desired FIds are not supported by the second engine diagnostics system. The method 500 therefore comprises a fourth step 508, in which one or more equivalent FIds are determined, which are equivalent to the one or more desired FIds and may be supported by the second engine diagnostics system. The equivalent FIds are determined by referring to a list of equivalent FIds associated with each of the one or more desired FIds within the master engine diagnostic configuration setting.

It may be determined that the equivalent FId is similarly unsupported by the second diagnostics system and hence the method 500 may repeat the step of determining an equivalent FId and considering whether it is supported by the second diagnostics system.

Similarly to when applying the method 400, a FId and its associated equivalent FIds may not be supported by the second engine diagnostics system, such a FId may be referred to as a redundant FId. Redundant FIds for each engine diagnostic system of interests may be stored within a redundant FIds list, associated with the engine diagnostic system. The method 500 may comprise a step in which it is determined whether a desired FId is a redundant FId for the second engine diagnostic system. If so, the redundant FId may be disregarded when translating the engine diagnostics configuration setting.

In some cases, the second engine diagnostic system may not support the full number of FIds associated with the DFC or equivalent DFC within the engine diagnostics configuration setting for the first engine diagnostics system. For example, the second engine diagnostic system may support 14 FIds being associated with a particular DFC, however, 16 FIds may be provided in the engine diagnostics configuration setting for the first engine diagnostics system. In this case, the method 500 may translate only the supported number of FIds. The FIds may be associated with the DFC, e.g. populated into a FId array associated with the DFC, in the order in which they are populated in the array associated with the DFC or equivalent DFC within the engine diagnostics configuration setting for the first engine diagnostics system.

When using the method 500, the first engine diagnostics system may be a known engine diagnostics system. In this case each of the DFCs and FIds may be defined within the master engine diagnostics configuration setting, and any available equivalents may have been identified. This may allow a full translation of the configuration setting to be performed.

Alternatively, the first engine diagnostics system may not be known and may comprise DFCs and/or FIds that are not defined within the master engine diagnostics configuration setting. In this case, no equivalents may be associated with DFCs and/or FIds. Similarly, the DFCs and/or FIds that are not defined within the master engine diagnostics configuration setting may not be listed as redundant FIds. Translation using the method 500 may still be performed, however the method may perform an additional step, in which unrecognised DFC and/or FIds are reported.

The unrecognised DFCs and/or FIds may be translated manually to be applied to the second engine diagnostics system. Additionally or alternatively, the unrecognised fault monitors and/or FIds may be added to the master engine diagnostics configuration setting and added to any appropriate lists of equivalents fault monitors and/or FIds. The settings added to the master engine diagnostics configuration setting may then be referred to when performing future translations.

Use of the master engine diagnostics configuration setting in the methods detailed above is highly advantageous for engine diagnostics configuration. As described above, the software for the engine diagnostics system may be regularly updated, which may lead to changes in the names of DFCs, the number of FIds supported by each DFC, and the names of FIds. Use of the master engine diagnostics configuration setting can allow the engine diagnostic system to be accurately reconfigured following an update to the software version, such that the engine diagnostics system provides consistent performance, with the minimum time and effort being required from an operator. In some cases, for example, when the number of FIds supported by one or more DFCs has been altered, it may be possible to provide a compatible configuration setting for the engine diagnostics systems using the methods detailed above, without any FIds being manually configured by the operator.

Additionally, use of the master diagnostics configuration setting allows changes to an engine diagnostic configuration to be made once and implemented consistently across all engine diagnostics systems of interest without any additional effort by the operator to ensure the changes are compatible. This may allow the configuration of all engine diagnostic systems to be improved. Furthermore, as changes or updates to configuration settings are made centrally, the task of recording the changes and identifying the reasons for particular changes is greatly simplified. By implementing the systems and methods described herein, the reasons for a change to a diagnostic configuration can be quickly identified regardless of the engine, vehicle and/or software version of the engine diagnostics system that the change was first implemented on.

Although the description above has been made with reference to calibration of an engine diagnostic system, the present invention may be equally applied to the configurations of any system, configured using a data structure comprising a plurality of arrays comprising one or more element; wherein the arrays and/or elements of the arrays may be associated with one or more equivalent arrays and/or array elements respectively to allow the same configuration to be applied to other systems for performing the same function.

It will be appreciated by the person skilled in the art, that although the present invention has been described by way of example, the scope of the invention is defined by the appended claims.

## Claims

1. A computer implemented method of configuring an engine diagnostic system (22), the engine diagnostic system being configured to monitor a plurality of fault statuses using a plurality of fault monitors, the method comprising:
determining a set of diagnostic monitors available within the engine diagnostic system (22), each of the diagnostic monitors configured to associate one of the fault monitors of the engine diagnostic system with one or more functions that are to be performed by the engine diagnostics system when a certain fault is detected;
determining for each diagnostic monitor, one or more desired functions that are desirable to be performed by the engine diagnostic system (22) following a detection event from the diagnostic monitor and one or more function identifiers used by the engine diagnostic system to reference the or each desired function;
providing a master array associated with a first diagnostic monitor, the master array comprising one or more function identifiers corresponding to functions to be performed following a detection event from the first diagnostic monitor;
searching for the first diagnostic monitor among the set of diagnostic monitors available within the engine diagnostic system (22);
if the first diagnostic monitor is found among the set of diagnostic monitors, translating the master array into an application specific array associated with the first diagnostic monitor, wherein translating the master array into an application specific array comprises:
determining whether the or each function identifier within the master array is supported by the engine diagnostic system (22);
if the function identifier is supported by the engine diagnostic system, copying the function identifier from the master array into the application specific array; or
if the function identifier is not supported by the engine diagnostic system:
determining an equivalent function identifier by referring to a list of equivalent function identifiers associated with the function identifier, the equivalent function identifier being equivalent to the function identifier that reference the desired function and supported by the engine diagnostic system (22) and copying the equivalent function identifier into the application specific array; or
if the first diagnostic monitor is not found among the set of diagnostic monitors, identifying an equivalent array associated with an equivalent diagnostic monitor, wherein the equivalent diagnostic monitor is equivalent to the first diagnostic monitor, wherein the equivalent diagnostic monitor is identified from a stored list of equivalent diagnostic monitors and translating the master array into an application specific array associated with the equivalent diagnostic monitor; and
configuring the engine diagnostic system using the function identifiers and equivalent function identifier .

2. The method according to any of the preceding claims, wherein the method further comprises determining an equivalent diagnostic monitor, which is equivalent to the available diagnostic monitor;
wherein the function identifiers and the equivalent function identifiers are determined by referring to the function identifiers associated with the equivalent diagnostic monitor.

3. The method according to claim 2, wherein the equivalent diagnostic monitor is determined by referring to a list of equivalent diagnostic monitors associated with the available diagnostic monitor.

4. The method according to claim 2 or 3, wherein the equivalent diagnostic monitor is not supported by the engine diagnostic system (22).

5. The method according to any of the preceding claims, wherein the method further comprises:
determining the number of function identifiers, which can be associated with the available diagnostic monitor of the engine diagnostic system (22);
wherein the number of function identifiers and equivalent function identifiers determined is less than or equal to the number of function identifiers that can be associated with the available diagnostic monitor.

6. The method according to any of the preceding claims, wherein the method further comprises:
determining one or more redundant function identifiers, which are not supported by the engine diagnostic system (22);
wherein equivalent function identifiers are not determined for function identifiers that are redundant function identifiers.

7. The method according to claim 6, wherein the redundant function identifiers are determined by referring to a list of redundant function identifiers associated with the engine diagnostic system (22).

8. The method according to any of the preceding claims, wherein the function identifiers are determined by referring to an existing calibration setting for another engine diagnostic system (22).

9. The method according to claim 8, wherein the method further comprises:
reporting one or more diagnostic monitors and/or function identifiers referenced within the existing calibration setting that are not supported by the engine diagnostic system (22) and have no equivalent diagnostic monitors and/or function identifiers respectively.

10. A computer program product comprising instructions, which when executed by a computing apparatus causes the computing apparatus to perform the method according to any of the preceding claims.

11. Computing apparatus configured to carry out the method of any of claims 1 to 9.

## Patentansprüche

1. Computerimplementiertes Verfahren zum Konfigurieren eines Motordiagnostiksystems (22), wobei das Motordiagnostiksystem dazu konfiguriert ist, eine Vielzahl von Fehlerzuständen unter Verwendung einer Vielzahl von Fehlermonitoren zu überwachen, wobei das Verfahren Folgendes umfasst:
Bestimmen eines Satzes von Diagnostikmonitoren, die innerhalb des Motordiagnostiksystems (22) verfügbar sind, wobei jeder der Diagnostikmonitore dazu konfiguriert ist, einen der Fehlermonitore des Motordiagnostiksystems einer oder mehreren Funktionen zuzuordnen, die durch das Motordiagnostiksystem durchzuführen sind, wenn ein bestimmter Fehler detektiert wird;
Bestimmen einer oder mehrerer gewünschter Funktionen, die durch das Motordiagnostiksystem (22) nach einem Detektionsereignis von dem Diagnostikmonitor durchzuführen sind, und einer oder
mehrerer Funktionskennungen, die durch das Motordiagnostiksystem verwendet werden, um auf die oder jede gewünschte Funktion zu verweisen, für jeden Diagnostikmonitor;
Bereitstellen eines Master-Arrays, das einem ersten Diagnostikmonitor zugeordnet ist, wobei das Master-Array eine oder mehrere Funktionskennungen umfasst, die den Funktionen entsprechen, die nach einem Detektionsereignis von dem ersten Diagnostikmonitor durchzuführen sind;
Suchen des ersten Diagnostikmonitors innerhalb des Satzes von Diagnostikmonitoren, die innerhalb des Motordiagnostiksystems (22) verfügbar sind;
wenn der erste Diagnostikmonitor innerhalb des Satzes von Diagnostikmonitoren gefunden wird, Übersetzen des Master-Arrays in ein anwendungsspezifisches Array, das dem ersten Diagnostikmonitor zugeordnet ist, wobei das Übersetzen des Master-Arrays in ein anwendungsspezifisches Array Folgendes umfasst:
Bestimmen, ob die oder jede Funktionskennung innerhalb des Master-Arrays durch das Motordiagnostiksystem (22) unterstützt wird;
wenn die Funktionskennung durch das Motordiagnostiksystem unterstützt wird, Kopieren der Funktionskennung von dem Master-Array in das anwendungsspezifische Array; oder
wenn die Funktionskennung nicht durch das Motordiagnostiksystem unterstützt wird:
Bestimmen einer äquivalenten Funktionskennung durch Bezugnahme auf eine Liste von äquivalenten Funktionskennungen, die der Funktionskennung zugeordnet sind, wobei die äquivalente Funktionskennung äquivalent zu der Funktionskennung ist, die auf die gewünschte Funktion verweist und durch das Motordiagnostiksystem (22) unterstützt wird, und Kopieren der äquivalenten Funktionskennung in das anwendungsspezifische Array; oder
wenn der erste Diagnostikmonitor nicht innerhalb des Satzes von Diagnostikmonitoren gefunden wird, Identifizieren eines äquivalenten Arrays, das einem äquivalenten Diagnostikmonitor zugeordnet ist, wobei der äquivalente Diagnostikmonitor dem ersten Diagnostikmonitor äquivalent ist, wobei der äquivalente Diagnostikmonitor aus einer gespeicherten Liste von äquivalenten Diagnostikmonitoren identifiziert wird, und Übersetzen des Master-Arrays in ein anwendungsspezifisches Array, das dem äquivalenten Diagnostikmonitor zugeordnet ist; und
Konfiguration des Motordiagnostiksystems unter Verwendung der Funktionskennung und der äquivalenten Funktionskennung.

2. Verfahren nach einem der vorhergehenden Ansprüche, wobei das Verfahren ferner das Bestimmen eines äquivalenten Diagnostikmonitors umfasst, der dem verfügbaren Diagnostikmonitor äquivalent ist;
wobei die Funktionskennungen und die äquivalenten Funktionskennungen durch Bezugnahme auf die dem äquivalenten Diagnostikmonitor zugeordneten Funktionskennungen bestimmt werden.

3. Verfahren nach Anspruch 2, wobei der äquivalente Diagnostikmonitor durch Bezugnahme auf eine Liste von äquivalenten Diagnostikmonitore bestimmt wird, die dem verfügbaren Diagnostikmonitor zugeordnet sind.

4. Verfahren nach Anspruch 2 oder 3, wobei der äquivalente Diagnostikmonitor nicht durch das Motordiagnostiksystem (22) unterstützt wird.

5. Verfahren nach einem der vorhergehenden Ansprüche, wobei das Verfahren ferner Folgendes umfasst:
Bestimmen der Anzahl von Funktionskennungen, die dem verfügbaren Diagnostikmonitor des Motordiagnostiksystems (22) zugeordnet werden kann;
wobei die Anzahl von bestimmten Funktionskennungen und äquivalenten Funktionskennungen kleiner oder gleich der Anzahl von Funktionskennungen ist, die dem verfügbaren Diagnostikmonitor zugeordnet werden kann.

6. Verfahren nach einem der vorhergehenden Ansprüche, wobei das Verfahren ferner Folgendes umfasst:
Bestimmen einer oder mehrerer redundanter Funktionskennungen, die nicht durch das Motordiagnostiksystem unterstützt werden (22) ;
wobei äquivalente Funktionskennungen nicht für Funktionskennungen bestimmt werden, die redundante Funktionskennungen sind.

7. Verfahren nach Anspruch 6, wobei die redundanten Funktionskennungen durch Bezugnahme auf eine dem Motordiagnostiksystem (22) zugeordnete Liste von redundanten Funktionskennungen bestimmt werden.

8. Verfahren nach einem der vorhergehenden Ansprüche, wobei die Funktionskennungen durch Bezugnahme auf eine bestehende Kalibrierungseinstellung für ein anderes Motordiagnostiksystem (22) bestimmt werden.

9. Verfahren nach Anspruch 8, wobei das Verfahren ferner umfasst:
Melden eines oder mehrerer Diagnostikmonitore und/oder einer oder mehreren Funktionskennungen, auf die in der bestehenden Kalibrierungseinstellung verwiesen wird, die jedoch nicht durch das Motordiagnostiksystem (22) unterstützt werden und keine äquivalenten Diagnostikmonitore und/oder Funktionskennungen aufweisen.

10. Computerprogrammprodukt, umfassend Anweisungen, die, wenn sie durch eine Rechenvorrichtung ausgeführt werden, die Rechenvorrichtung veranlassen, das Verfahren nach einem der vorhergehenden Ansprüche durchzuführen.

11. Rechenvorrichtung, die dazu konfiguriert ist, das Verfahren nach einem der Ansprüche 1 bis 9 durchzuführen.

## Revendications

1. Procédé mis en œuvre par ordinateur pour configurer un système de diagnostic de moteur (22), le système de diagnostic de moteur étant configuré pour surveiller une pluralité d'états de défaut à l'aide d'une pluralité de moniteurs de défaut, le procédé comprenant :
la détermination d'un ensemble de moniteurs de diagnostic disponibles dans le système de diagnostic du moteur (22), chacun des moniteurs de diagnostic étant configuré pour associer l'un des moniteurs de défaut du système de diagnostic du moteur à une ou plusieurs fonctions qui doivent être exécutées par le système de diagnostic du moteur lorsqu'un certain défaut est détecté ;
la détermination pour chaque moniteur de diagnostic, d'une ou plusieurs fonctions souhaitées qu'il est souhaitable que le système de diagnostic du moteur (22) exécute suite à un événement de détection provenant du moniteur de diagnostic et un ou plusieurs identifiants de fonction utilisés par le système de diagnostic du moteur pour référencer la ou chaque fonction souhaitée ;
la fourniture d'un réseau maître associé à un premier moniteur de diagnostic, le réseau maître comprenant un ou plusieurs identifiants de fonction correspondant à des fonctions à exécuter suite à un événement de détection provenant du premier moniteur de diagnostic ;
la recherche d'un premier moniteur de diagnostic parmi l'ensemble des moniteurs de diagnostic disponibles dans le système de diagnostic du moteur (22) ;
si le premier moniteur de diagnostic est trouvé parmi l'ensemble de moniteurs de diagnostic, la translation du réseau maître en un réseau spécifique à l'application associé au premier moniteur de diagnostic, dans lequel la translation du réseau maître en un réseau spécifique à l'application comprend :
la détermination si l'identifiant de fonction ou chaque identifiant de fonction dans le réseau maître est pris en charge par le système de diagnostic du moteur (22) ;
si l'identifiant de fonction est pris en charge par le système de diagnostic du moteur, la copie de l'identifiant de fonction du tableau principal dans le tableau spécifique à l'application ; ou
si l'identifiant de fonction n'est pas pris en charge par le système de diagnostic du moteur :
la détermination d'un identifiant de fonction équivalent en se référant à une liste d'identifiants de fonction équivalents associés à l'identifiant de fonction, l'identifiant de fonction équivalent étant équivalent à l'identifiant de fonction qui référence la fonction souhaitée et pris en charge par le système de diagnostic du moteur (22) et en copiant l'identifiant de fonction équivalent dans le réseau spécifique à l'application ; ou
si le premier moniteur de diagnostic n'est pas trouvé parmi l'ensemble de moniteurs de diagnostic, identifiant un réseau équivalent associé à un moniteur de diagnostic équivalent, dans lequel le moniteur de diagnostic équivalent est équivalent au premier moniteur de diagnostic, dans lequel le moniteur de diagnostic équivalent est identifié à partir d'une liste stockée de moniteurs de diagnostic équivalents et translater le réseau maître en un réseau spécifique à l'application associé au moniteur de diagnostic équivalent ; et
la configuration du système de diagnostic du moteur à l'aide des identifiants de fonction et de l'identifiant de fonction équivalent.

2. Procédé selon l'une quelconque des revendications précédentes, dans lequel le procédé comprend également la détermination d'un moniteur de diagnostic équivalent, qui est équivalent au moniteur de diagnostic disponible ;
dans lequel les identifiants de fonction et les identifiants de fonction équivalents sont déterminés en se référant aux identifiants de fonction associés au moniteur de diagnostic équivalent.

3. Procédé selon la revendication 2, dans lequel le moniteur de diagnostic équivalent est déterminé en se référant à une liste de moniteurs de diagnostic équivalents associés au moniteur de diagnostic disponible.

4. Procédé selon la revendication 2 ou 3, dans lequel le moniteur de diagnostic équivalent n'est pas pris en charge par le système de diagnostic du moteur (22).

5. Procédé selon l'une quelconque des revendications précédentes, dans lequel le procédé comprend également :
la détermination du nombre d'identifiants de fonction, qui peuvent être associés au moniteur de diagnostic disponible du système de diagnostic du moteur (22) ;
dans lequel le nombre d'identifiants de fonction et d'identifiants de fonction équivalents déterminés est inférieur ou égal au nombre d'identifiants de fonction qui peuvent être associés au moniteur de diagnostic disponible.

6. Procédé selon l'une quelconque des revendications précédentes, dans lequel le procédé comprend également :
la détermination d'un ou plusieurs identifiants de fonction redondants, qui ne sont pas pris en charge par le système de diagnostic du moteur (22) ;
dans lequel les identifiants de fonction équivalents ne sont pas déterminés pour les identifiants de fonction qui sont des identifiants de fonction redondants.

7. Procédé selon la revendication 6, dans lequel les identifiants de fonction redondants sont déterminés en se référant à une liste d'identifiants de fonction redondants associés au système de diagnostic de moteur (22).

8. Procédé selon l'une quelconque des revendications précédentes, dans lequel les identifiants de fonction sont déterminés en se référant à un paramètre d'étalonnage existant pour un autre système de diagnostic de moteur (22).

9. Procédé selon la revendication 8, dans lequel le procédé comprend également :
le signalement d'un ou plusieurs moniteurs de diagnostic et/ou identifiants de fonction référencés dans le paramètre d'étalonnage existant qui ne sont pas pris en charge par le système de diagnostic du moteur (22) et qui ne présentent pas de moniteurs de diagnostic et/ou d'identifiants de fonction équivalents respectivement.

10. Produit de programme informatique comprenant des instructions, qui lorsqu'il est exécuté par un appareil informatique amène l'appareil informatique à exécuter le procédé mis en œuvre par procédé selon l'une quelconque des revendications précédentes.

11. Appareil informatique configuré pour mettre en œuvre le procédé selon l'une quelconque des revendications 1 à **9.**
